(19) Europäisches Patentamt
European Patent Office
Office européen des brevets

(11) **EP 0 939 382 A1**

(12) **EUROPEAN PATENT APPLICATION**
published in accordance with Art. 158(3) EPC

(43) Date of publication:
01.09.1999 Bulletin 1999/35

(51) Int. Cl.$^6$: **G06T 7/00**, G06T 1/00,
G01B 11/00

(21) Application number: 98923067.7

(22) Date of filing: 01.06.1998

(86) International application number:
PCT/JP98/02412

(87) International publication number:
WO 98/54673 (03.12.1998 Gazette 1998/48)

(84) Designated Contracting States:
DE

(30) Priority: 30.05.1997 JP 15614797

(71) Applicant: FANUC LTD
Minamitsuru-gun, Yamanashi 401-0597 (JP)

(72) Inventor: ARIMATSU, Taro
Yamanashi 401-0310 (JP)

(74) Representative:
Billington, Lawrence Emlyn et al
Haseltine Lake & Co.
Imperial House
15-19 Kingsway
London WC2B 6UD (GB)

(54) **IMAGE ACQUISITION DEVICE**

(57) When a pulse coder detects the arrival of work (W) at a position P1 after the work (W) is conveyed by distance D1 from the position where a sensor detected, a camera (CM1) photographs characteristic portion A of the work (W) so as to supply an obtained image to an image processing apparatus (20). When the pulse coder (3) detects arrival of the work W at position P2 after the work (W) is further conveyed by distance D12 from the point P1, a camera (CM2) photographs characteristic portion B of the work W so as to supply an obtained image to the image processing apparatus. Then, the image processing apparatus (20) processes these two images so as to obtain information about the position and posture of the work W.

Fig. 3

# Description

## TECHNICAL FIELD

The present invention relates to an apparatus for picking up an image about an object, particularly a large object which is being moved by such a conveying means as a belt conveyor, more particularly, the present invention relates to an apparatus for successively picking up a plurality of images regarding an object. The apparatus according to the present invention may be applied to a system for inspecting a moving article and a system for performing a variety of work by using a robot which is tracking-controlled.

## BACKGROUND ART

It is one of widely known techniques to pick up images about articles which are being moved by a belt conveyor or the like, for automation in detection of positions of the articles, measurement of shapes and dimensions of the articles or an inspecting operation. A camera is employed to pick up images, and, naturally, accuracy of each of the detected positions of the articles, measured shapes and dimensions or obtained results of the inspections are considerably determined by precision (resolution) of the picked up images. In general, for increasing measuring and inspecting accuracy it is necessary to make a visual field small to obtain precise images.

Therefore, one photographing operation using one camera cannot sometimes obtain a required image (for example, two characteristic portions of one work distant from each other). To overcome the above-mentioned problem, an image pickup apparatus has been developed which is designed to be capable of simultaneously performing photographing operation using a plurality of cameras and an operation for capturing images.

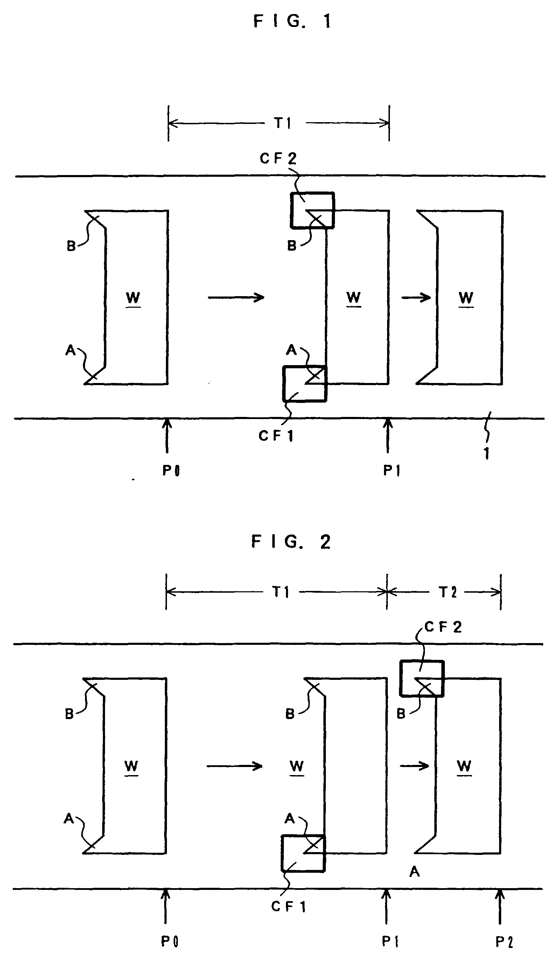

FIG. 1 is a diagram showing an image pickup system using such a image pickup apparatus. Referring to the drawing, reference numeral 1 represents a conveyor which is continuously moved from a left-hand position to a right-hand position in the drawing in which large work W placed on the conveyor 1 are continuously moving. It is assumed here that images of two characteristic portions A and B of the work W are required. In this case, the procedure of photographing / taking-in of the image according to this system is usually as follows.

1. A proper sensor disposed at an position P0 upstream of photographing position P1 is used to detect arrival of the work at the position P0.
2. When time T1 elapsed after the detection of the arrival of the work W at the position P0, photographing of the two characteristic portions A and B of the work W is simultaneously performed by two cameras (not shown) having visual fields CF1 and CF2 and those images are taken in an image processing apparatus simultaneously. The time T1 which defines photographing timing is preliminarily determined as a value (T1 = D1/v) obtained by dividing distance D1 between positions P0 and P1 by estimated speed v of the conveyor.

Although the object can be accomplished according to this system so far as it goes, an image pickup apparatus specially designed to perform simultaneous photographing of a plurality of images and simultaneous taking-in of these image must be prepared, which results in a problem in that cost is increased.

Therefore, a method which is more usually employed, as shown in Fig. 2 is a system in which photographing and taking-in of an image of a plurality of portions for one object are performed a plurality of times. Fig. 2 shows the same situation as that shown in Fig. 1. That is, large work W placed on the conveyor 1 are being continuously conveyed from a left-hand position to a right-hand position in the drawing, and it is assumed here that images of two characteristic portions A and B of one work W are required. The procedure of photographing / taking-in of the image according to this system is, in general, as follows.

1. A proper sensor disposed at an position P0 upstream of photographing position P1 is used to detect arrival of the work at the position P0.
2. When time T1 elapsed after the detection of the arrival of the work W at the position P0, photographing of one characteristic portion A of the work W is performed by one camera (not shown) having a visual field CF1 and this image is taken in an image processing apparatus. The time T1 which defines photographing timing is determined in advance as a value (T1 = D1/v) obtained by dividing distance D1 between positions P0 and P1 by estimated speed v of the conveyor.
3. When time T2 elapsed after detection of the arrival of the work W at the position P1 (that is, elapsed after the photographing), photographing of the other characteristic portion B of the same work W is performed by another camera (not shown) having a visual field CF2 and this image is taken in the image processing apparatus. The time T2 which defines photographing timing is determined in advance as a value (T2 = D2/v) obtained by dividing distance D2 between the positions P1 and P2 by the estimated speed v of the conveyor.

According to this system, though it is unnecessary to prepare an image pickup apparatus specially designed to perform simultaneous photographing of a plurality of images and simultaneous taking-in of these images, there is a possibility in that required images (that is, images in which the characteristic portions A and B are appropriately included in the visual fields CF1 and CF2) cannot be obtained if actual movement speed of the conveyor 1 is deviated from the estimated speed v. Also in the system shown in FIG. 1, a similar problem may occur for the simultaneous photographing at the position P1. On the other hand, in the system shown in FIG. 2, even if a means is provided which is capable of appropriately photographing the characteristic portion A at the first photographing position P1, appropriate photographing of the characteristic portion B at the second photographing position P2 cannot be assured.

That is, as far as the first photographing timing is concerned, that can be realized by shortening the distance between P0 and P1, thus the above-mentioned problem can substantially solved. However, in the system shown in FIG. 2, shortening of the distance between P1 and P2 is required (because, when the conveyor speed is high, substantially simultaneous photographing and taking-in of images are required), and thus a further critical problem arises as compared with the structure which employs the system shown in FIG. 1.

## DISCLOSURE OF THE INVENTION

An object of the present invention is to provide an image pickup apparatus which is able to pick up a plurality of required images at appropriate timing even if movement speed of an object is changed, without a necessity of using an apparatus designed specially to perform simultaneous photographing, taking-in of a plurality of images.

To achieve the above-mentioned object, in the present invention, an image pickup apparatus for time-sequentially picking up images regarding a subject which is being moved by conveying means by a plurality of times, comprises: conveyance-distance detecting means for detecting distance of conveyance performed by the conveying means; and means for controlling timing of at least second and following image pickup operations of the image pickup operations performed by the plurality of times on the basis of an output of the conveyance-distance detecting means.

According to the present invention, the timing of the photographing operations performed a plurality of times is determined on the basis of data indicating the actual movement distance of the object, so that a plurality of required images can be picked up at appropriate timings even if movement speed of the object is changed, without using an apparatus specially designed to perform simultaneous photographing/taking-in of a plurality of images.

## BRIEF DESCRIPTION OF DRAWINGS

FIG. 1 is a diagram showing a conventional system in which simultaneous photographing/taking-in of a plurality of images is performed;

FIG. 2 is a diagram showing a conventional system in which photographing/taking-in of a plurality of images a plurality of times is performed in order to obtain a plurality of images;

FIG. 3 is a diagram showing an arrangement of respective components which constitute an embodiment of an image pickup apparatus according to the present invention;

FIG. 4 is a block diagram showing a main section of one example of a system configuration corresponding to the arrangement shown in FIG. 3;

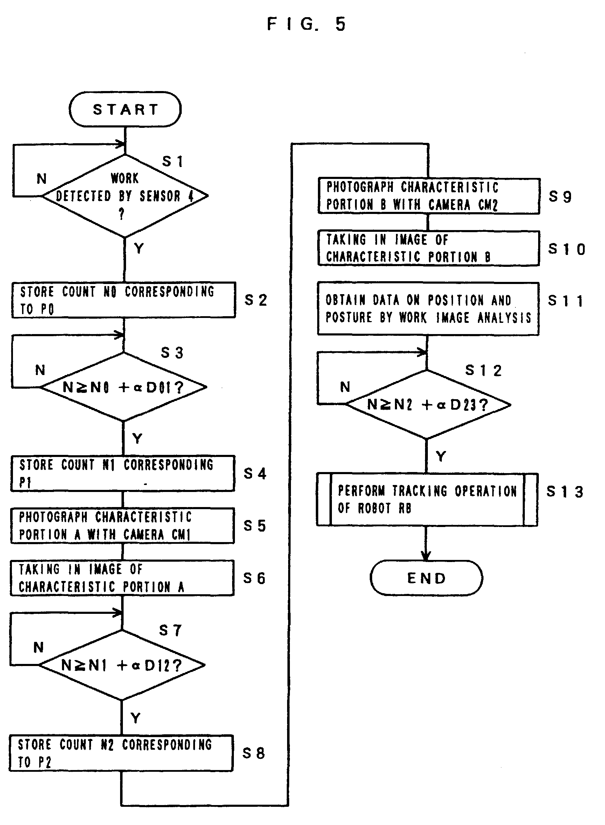

FIG. 5 is a flow chart showing an outline of contents of an image processing in accordance with the embodiment shown in FIG. 3; and

FIG. 6 is a diagram showing one example of postures of a work W different from postures shown in FIG. 3.

## BEST MODE FOR CARRYING OUT THE INVENTION

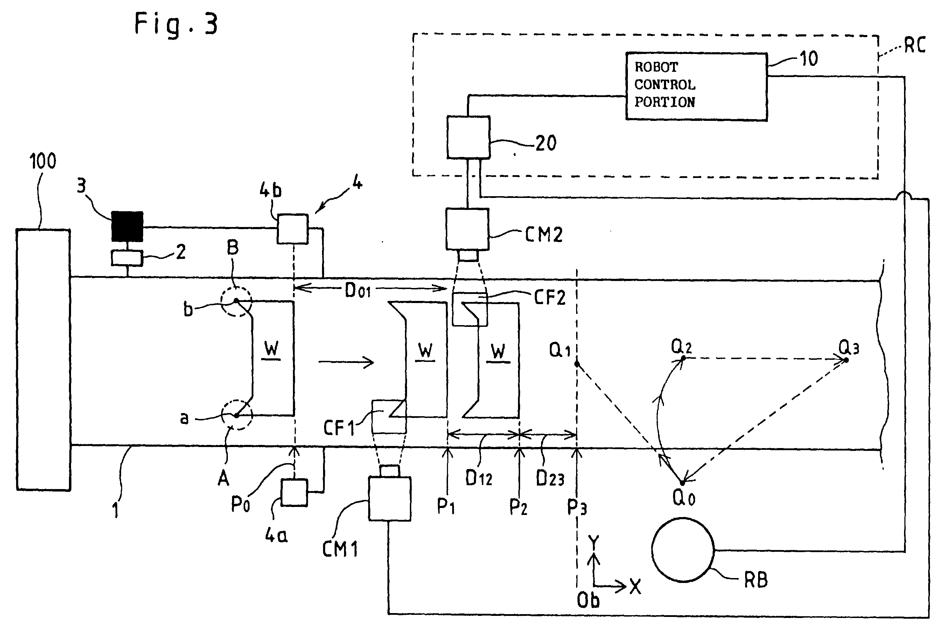

An arrangement of respective components of an embodiment of an image pickup apparatus according to the present invention will now be described with reference to the schematic view of FIG. 3.

In FIG. 3, a conveyor 1 for conveying work W is connected to a work supply source 100. The work W is of large size such as a trunk lid for automobiles, which is supplied to an upper surface of the conveyor 1 from the work supply source 100 which is a final stage of a pressing step. The conveyor 1 is continuously operated in a steady operation by a motor which a drive portion 2 has built-in. Amount of rotations of the drive motor and a shaft connected to the drive motor is always detected by a pulse coder 3 and outputs from the pulse coder 3 are transmitted in a pulse train configuration to a control unit described later.

A transmitting portion 4a and a receiving portion 4b are disposed on one side of the conveyor 1 and on the other side thereof, and the transmitting portion 4a and the receiving portion 4b constitute a sensor 4 which detects arrival of a work W. The sensor 4 detects a work W (more specifically, a pointed end of the work W, in this embodiment) placed on the conveyor 1 and conveyed, at a detection position P0. As an example of such a sensor there may be used a reflecting-type optical sensor, a transmissive type optical sensor, a magnetic sensor, a contact sensor or the like.

Two cameras CM1 and CM2 are disposed above the conveyor 1. One camera CM1 has only a visual field CF1 which will cover a characteristic portion A of the large work W on the conveyor 1 with some margin left. The other camera CM2 has only a visual field CF2 which will cover a characteristic portion B of the large work W on the conveyor 1 with some margin left. Further, the visual field CF2 of the camera CM2 is set to a region downstream in the direction of movement of the conveyor 1 with respect to the visual field CF1 of the camera CM1. Therefore, the deviation between the time at which the characteristic portion A of the work W is photographed by the upstream-side camera CM1 and the time at which the characteristic portion B of the work W is photographed by the downstream-side camera CM2 must accurately correspond to the movement of the work W on the conveyor 1 which takes place between those two times.

As indicated with a dashed line, according to this embodiment, a robot controller RC, which functions as a control unit for controlling the whole system, has an image processing apparatus 20 built-in. The robot controller RC incorporates a robot control section 10, and the robot control section 10 controls a robot RB disposed downstream of the positions at which the cameras CM1 and CM2 photograph the work W.

The robot RB for holding or machining the work W, for example, obtains data indicating the position / posture of the work W from the built-in image processing apparatus 20 so that tracking-control of the robot RB is performed. The robot controller RC is connected to the sensor 4 so as to detect arrival of the work W by utilizing a detection signal from the sensor 4.

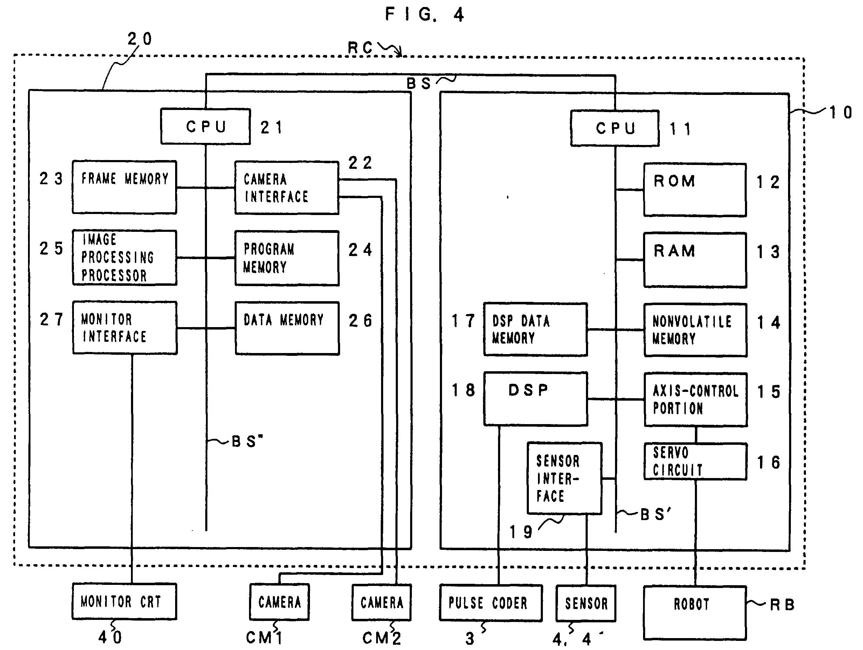

An example of a system configuration corresponding to the arrangement of FIG. 3 will now be described with reference to FIG. 4 which is a block diagram showing a main portion of the system.

The robot controller RC is provided with a robot control section 10 as well as an image processing apparatus 20 for processing images photographed by cameras CM1 and CM2. That is, the robot controller RC is of a type with a built-in visual sensor.

The image processing apparatus 20 includes a CPU (Central Processing Unit) 21 composed of a microprocessor, and the CPU is connected with a camera interface 22, a frame memory (an image memory) 23, a program memory 24, an image processing processor 25, a data memory 26 and a monitor interface 27 through a bus BS".

The camera interface 22 is of a type where a plurality of cameras can be connected based on connector numbers and in this embodiment the two cameras CM1 and CM2 are connected to the camera interface 22. When a photograph command is issued to the camera CM1 (or CM2) with a connector number specified, a photographing operation is performed by an electronic shutter function (having shutter speed of, for example, 1/1000 second) set in the camera CM1 (or CM2), and an image signal is, through the camera interface 22, stored in a form of gray scale signal in a frame memory 23.

The monitor interface 27 is connected with a monitor CRT 40 on which an image which is being photographed by the camera CM1 or the camera CM2, a past image which was stored in the frame memory 23, an image processed by the image processing processor 25 or the like is displayed as necessary.

An image signal of the characteristic portion A (photographed by the camera CM1) or the characteristic portion B (photographed by the camera CM2) stored in the frame memory 23 is analyzed by using the image processing processor 25 in accordance with an analyzing program stored in the program memory 24, and required data relating to the work W is produced.

Data relating to the work W are, for example, positions of the characteristic portions A and B, and on the basis of these data, the position / posture (deviation from predetermined reference position and/or posture) of the work W is detected for performing tracking-control (tracking control in which positioning error of the work W is corrected) of the robot RB.

The data memory 26 comprises a region for storing a variety of set values relating to the visual sensor including the two cameras CM1 and CM2 and the image processing apparatus 20 and also a region which is used to temporarily store data required for a variety of processing the CPU 21 executes.

In the robot controller RC, the CPU 21 is, through a bus BS, connected to a CPU 11 of the robot control section 10 to be described later. As a result, the image processing apparatus 20 is constituted as a unit substantially integrated with the robot control section 10.

The robot control section 10 is provided with the CPU 11 connected to the CPU 21 of the image processing apparatus 20 through the bus BS. The CPU 11 is connected, through a bus BS', with a ROM 12 in which a program for controlling the whole system is stored, a RAM 13 which is used for temporarily storing data for processing of CPU, a nonvolatile memory 14 in which an operating program, data for setting a coordinate system, a variety of other setting parameters and so forth is stored, an axis-control portion 15 connected to a mechanical portion of the robot RB through a servo circuit 16, a data memory 17 for digital signal processor (DSP), a digital signal processor (hereinafter referred to as DSP) 18 and a sensor interface 19 for the sensor 4.

Data which is previously written in the nonvolatile memory 14 includes scale factors ($\alpha = \Delta n/D$) indicating the relationship between movement distance D of the conveyor 1 and an count output (amount $\Delta n$ of increments) of the pulse coder 3 and further includes distance D01 between positions P0 and P1, distance D12 between positions P1 and 2 and distance D23 between positions P2 and P3. The foregoing data can be obtained by calibration which is performed prior to carrying out an operation.

The DSP 18 is a processor for processing an output count signal of the pulse coder 3. The data memory 17 for DSP is a memory for exclusive use of DSP which stores data processed by the DSP 18 and set parameters. The DSP 18 has a function of outputting count output of the pulse coder 3 at any point of time based on a command issued from the CPU 11 so as to write the output in a predetermined area in the DSP data memory 17. Also the CPU 21 of the image processing apparatus 20 is accessible to the DSP data memory 17 through the bus BS.

A preparation work, outline of the operation and procedure of processings to be carried out for the foregoing system incorporating the image pickup apparatus of the present invention will now be described. In this case, it is assumed that programs for performing required processes and relative data has been previously stored in the program memory 24 and the data memory 26 of the image processing apparatus 20 and the memories in the robot control section 10.

Though the detailed description of the tracking operation of the robot RB is omitted here, it is assumed that the tracking operation is started when a representative point of the work W arrives at a predetermined position Q1 downstream of the position at which a photographing operation is performed by the second camera CM2 (that is, when the pointed end of the work W arises the position P3). The initial position (the home position) of the robot RB is Q0. The robot RB completes tracking operation is at position Q2, and then returns to the initial position (the home position) Q0.

[Schematic Description of Operation]

1. When the robot controller RC receives a work W supply starting signal, the sensor 4 is turned on.

2. An operation for determining whether or not the work W has arrived at the position P0 is started. When arrival of (the pointed end of) the work W at the position P0 has been detected by the sensor 4, count N0 outputted by the pulse coder 3 at this point of time is stored.

3. When the work W reaches the upstream-side photographing position P1 (that is, a position downstream apart from the position P0 of the sensor for distance D01), the camera CM1 photographs the characteristic portion A of the work W so as to take the obtained image into the image processing apparatus 20. The time at which the work W has reaches the photographing position P1 is determined to be a time at which the count output of the pulse coder 3 comes to be $N1 = N0 + \alpha\, D01$.

4. When the work W reaches the downstream-side photographing position P2 (that is, a position apart from the upstream-side photographing position P1 in downstream direction by the distance D12), the camera CM2 photographs the characteristic portion B of the work W so as to take the image into the image processing apparatus 20. The time at which the work W reaches the photographing position P2 is determined to be a time at which the count output of the pulse coder comes to be $N2 = N1 + \alpha\, D12$.

5. The images of the characteristic portions A and B are analyzed so that required information of the work W is obtained. For example, the positions of pointed ends a and b in the characteristic portions A and B are detected. As a portion of an inspecting process, the shapes and dimensions of the characteristic portions A and B may be determined in this stage.

6. When the work W reaches the tracking start position P3, tracking operation by the robot RB is started. When the robot RB completes tracking operation, the robot RB returns to the initial position Q0. The time at which the work W reaches the tracking-operation start position P3 is determined to be a time at which the count output of the pulse coder 3 comes to be $N3 = N2 + \alpha\, D23$.

FIG. 4 is a flow chart showing outlines of the processing of the CPU 11 or 21 which corresponds to the above-mentioned operation. Processings in each step will now be described below.

(Step S1): Receiving an external signals indicating supply of the work W to the conveyor 1, the CPU 11 and the CPU 21 start preparing for waiting for detection of arrival of the work W by the sensor 4.

(Step S2): When the sensor 4 detects arrival of the work W, the count output N0 of the pulse coder 3 at the arrival time is immediately stored in the data memory 17 for DSP and the data memory 26.

(Step S3): Then, arrival of the work W at the upstream-side photographing position P1 is waited for. Arrival at the photographing position P1 is determined when the count output of the pulse coder 3 comes to be $N0 + \alpha\, D01$, where $\alpha\, D01$ corresponds to the distance between positions P0 and P1 converted into count output of the pulse coder 3, and $\alpha$ represents a scale factor indicating the relationship between count output of the pulse coder 3 and distance of movement of the conveyor.

(Step S4): Count N1 outputted by the pulse coder 3 at the foregoing time is stored. As a matter of course, the count N1 is the same as or slightly larger than $N0 + \alpha\, D01$ (because calculating intervals are finite).

(Step S5): The camera CM1 photographs the characteristic portion A.

(Step S6): The image of the characteristic portion A is taken into the image processing apparatus 20.

(Step S7): Then, arrival of the work W at the downstream-side photographing position P2 is waited for. The image of the characteristic portion A taken in at step S6 will be processed later in order to perform the following photographing taking-in of an image with sufficient margin (refer to step S11). Arrival at the photographing position P2 is determined when the count output of the pulse coder 3 comes to be N1 + $\alpha$ D12, where $\alpha$ D12 corresponds to the distance between the positions P1 and P2 converted into count output of the pulse coder 3.

(Step S8): Count N2 outputted by the pulse coder 3 at the foregoing time is stored. As a matter of course, the count N2 is the same as or slightly larger than N1 + $\alpha$ D12 (because the calculating intervals are finite).

(Step S9): The camera CM2 photographs the characteristic portion B.

(Step S10): The image of the characteristic portion B is taken into the image processing apparatus 20.

(Step S11): The image of the characteristic portion A taken in at step S6 and the image of the characteristic portion B taken in at step S10 are processed so that required data is obtained. For example, the positions of the pointed ends a and b (that is, data indicting the position/posture of the work W) of the work W are obtained.

(Step S12): Arrival of the work W at the tracking start position P3 is waited for. Arrival at the tracking start position P3 is determined when the count output of the pulse coder 3 comes to be N2 + $\alpha$ D23, where $\alpha$ D23 corresponds to the distance between the positions P2 and P3 converted into count output of the pulse coder 3.

(Step S13): The robot RB starts tracking operation, and when completing the tracking operation, then returns to the initial position Q0. Since the processing for performing the tracking operation is well known, the detailed description is omitted here.

Thus, a sequential operation cycle, which includes an operation for photographing a plurality of portions (two portions in this embodiment) in a work W and taking-in of an image, is completed. To successively process the work supplied, the process from step S1 has to be repeated.

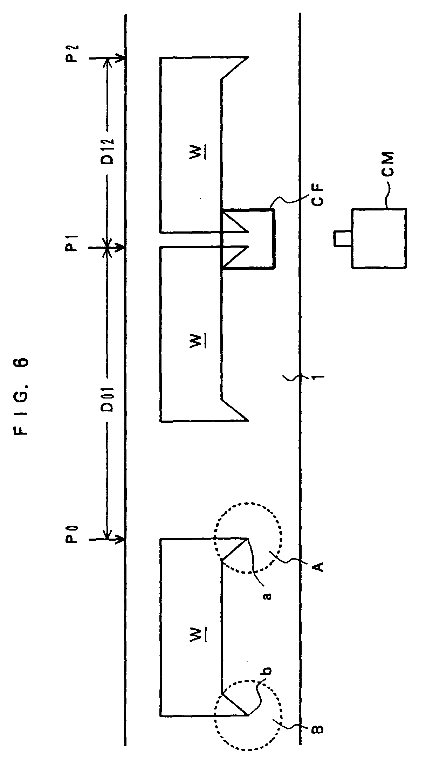

In the foregoing embodiment, tracking operation by the robot is performed following photographing of a plurality of portions of the work W and taking-in of the image. But, another embodiment may be possible in the present invention. For example, in the case where an image pickup apparatus is employed in a process for inspecting products, images obtained by photographing a plurality of portions may be analyzed to determine an abnormality in shape or dimensions. If the work W assumes the posture as shown in FIG. 6 when it is conveyed and the visual field CF is set as shown in FIG. 6, a set of camera can be used to perform a plurality of photographing operations. That is, in the layout shown in FIG. 2 and the system configuration shown in FIG. 3, although the camera CM1 or the camera CM2 is removed and visual field is set at the same region CF, the same object as the foregoing embodiment can attain can also be attained by performing similar procedures.

In the structure shown in FIG. 6, the pointed end in the characteristic portion A of the work W is detected by the sensor 4 (at the position P0). Similarly to the above-mentioned embodiment, the count output of the pulse coder which measures the distance of movement of the conveyor 1 is monitored to determine arrival of the work at the photographing positions P1 and P2. Then, a set of camera CM sequentially photographs the characteristic portions A and B and take in the images.

In the above embodiments, photographing and taking-in of the image are carried out two times, respectively, but as can easily be understood from the above-mentioned description, the present invention may be applied to a case where photographing and taking-in of the image is carried out three times, respectively.

## Claims

1. An image pickup apparatus for successively picking up images regarding an object which is being moved by conveying means, a plurality of times, comprising:

    conveyance distance detecting means for detecting distance of conveyance performed by the conveying means; and
    means for controlling timing of at least second image picking-up operation, of the image picking-up operations performed a plurality of times, on the basis of an output from said conveyance distance detecting means.

2. An image pickup apparatus according to claim 1, wherein said conveyance distance detecting means is a pulse coder connected to a drive shaft of said conveying means.

3. An image pickup apparatus according to claim 1 or 2, wherein photographing operations which are successively performed a plurality of times for picking up the images are performed by cameras disposed individually.

4. An image pickup apparatus according to claim 1 or 2, wherein at least a part of photographing operations which are successively performed a plurality of times for picking up the images is performed by the same camera.

5. An image pickup apparatus comprising:

    first position detecting means for detecting arrival of an article, which is being moved, at a first specific position;
    a first camera which responds to an output of said first position detecting means to photograph a first portion of the article with the first portion caught within the visual field;

second position detecting means for detecting arrival of the article, which is being moved, at a second specific position apart from the first specific position by a predetermined distance;

a second camera which responds to an output of said second-position detecting means to photograph a second portion of the article with the second portion caught within the visual field, and

an image processing apparatus for taking in the images photographed by said first and second cameras, conducting image processings of these images and obtaining data on specific locations in the first and second portions of the article.

6. An image pickup method comprising the steps of: photographing a first portion of an article when arrival of the article, which is being moved, at a first specific position is detected and supplying an image of the first portion to an image processing apparatus;

photographing a second portion of the article when arrival of the article at a second specific position, apart from the first specific position by a predetermined distance, is detected and supplying an image of the second portion to the image processing apparatus; and

successively processing the image of the first portion and the image of the second portion which said image processing apparatus has taken in for storage, obtaining data on respective specific locations of the first and second portions of the article, and obtaining information indicating the position and posture of the article.

7. An image pickup method according to claim 6, wherein the first portion and the second portion of the article are photographed by the same camera.

FIG. 1

FIG. 2

Fig.3

EP 0 939 382 A1

20  RC  BS

CPU 21

23 FRAME MEMORY    CAMERA INTERFACE 22

25 IMAGE PROCESSING PROCESSOR    PROGRAM MEMORY 24

27 MONITOR INTERFACE    DATA MEMORY 26

BS"

10

CPU 11

ROM 12

RAM 13

17 DSP DATA MEMORY    NONVOLATILE MEMORY 14

18 DSP    AXIS-CONTROL PORTION 15

SENSOR INTERFACE    SERVO CIRCUIT 16

19  BS'

MONITOR CRT    CAMERA    CAMERA    PULSE CODER    SENSOR    ROBOT    RB

40    CM1    CM2    3    4, 4'

EP 0 939 382 A1

FIG. 5

```
                    ┌──────────────┐
                    │    START     │
                    └──────┬───────┘
                           │
         ┌─────────────────┤
      N  ╱      WORK        ╲  S1
    ┌────  DETECTED BY SENSOR 4
    │    ╲        ?          ╱
    │     └────────┬─────────┘
    │              │ Y
    │     ┌────────┴─────────┐
    │     │ STORE COUNT N0    │ S2
    │     │ CORRESPONDING TO P0│
    │     └────────┬─────────┘
    │              │
    │     ┌────────┤
    │  N  ╱         ╲  S3
    │ ┌───  N≥N0+αD01? 
    │ │   ╲         ╱
    │ │    └────┬───┘
    │ │         │ Y
    │ │  ┌──────┴──────────┐
    │ │  │ STORE COUNT N1   │ S4
    │ │  │ CORRESPONDING P1 │
    │ │  └──────┬──────────┘
    │ │         │
    │ │  ┌──────┴──────────┐
    │ │  │ PHOTOGRAPH CHARAC │ S5
    │ │  │ PORTION A CAMERA CM1│
    │ │  └──────┬──────────┘
```

$N \geq N0 + \alpha D01?$

STORE COUNT N0 CORRESPONDING TO P0 — S2

STORE COUNT N1 CORRESPONDING P1 — S4

PHOTOGRAPH CHARACTERISTIC PORTION A WITH CAMERA CM1 — S5

TAKING IN IMAGE OF CHARACTERISTIC PORTION A — S6

$N \geq N1 + \alpha D12?$ — S7

STORE COUNT N2 CORRESPONDING TO P2 — S8

PHOTOGRAPH CHARACTERISTIC PORTION B WITH CAMERA CM2 — S9

TAKING IN IMAGE OF CHARACTERISTIC PORTION B — S10

OBTAIN DATA ON POSITION AND POSTURE BY WORK IMAGE ANALYSIS — S11

$N \geq N2 + \alpha D23?$ — S12

PERFORM TRACKING OPERATION OF ROBOT RB — S13

END

F I G. 6

## INTERNATIONAL SEARCH REPORT

| | International application No. |
|---|---|
| | PCT/JP98/02412 |

A. CLASSIFICATION OF SUBJECT MATTER
    Int.Cl⁶ G06T7/00, G06T1/00, G01B11/00

According to International Patent Classification (IPC) or to both national classification and IPC

B. FIELDS SEARCHED

Minimum documentation searched (classification system followed by classification symbols)
    Int.Cl⁶ G06T7/00, G06T1/00, G01B11/00

Documentation searched other than minimum documentation to the extent that such documents are included in the fields searched
    Jitsuyo Shinan Koho          1926-1998    Toroku Jitsuyo Shinan Koho    1994-1998
    Kokai Jitsuyo Shinan Koho    1971-1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 2-139679, A (Seisho Kawabata), 29 May, 1990 (29. 05. 90) (Family: none) | 1, 2, 4 |
| Y | | 3, 5, 6, 7 |
| Y | JP, 4-34666, A (Sanyo Electric Co., Ltd.), 5 February, 1992 (05. 02. 92) (Family: none) | 3, 5, 6, 7 |
| A | JP, 9-72717, A (Fanuc Ltd.), 18 March, 1997 (18. 03. 97) (Family: none) | 1-7 |

☐ Further documents are listed in the continuation of Box C.    ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 24 August, 1998 (24. 08. 98) | 1 September, 1998 (01. 09. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

13